# EUROPEAN PATENT SPECIFICATION

(11) **EP 3 756 941 B1**
(45) Date of publication and mention of the grant of the patent: **05.07.2023**
(21) Application number: 19183037.1
(22) Date of filing: 27.06.2019
(51) Int. Cl.: B60N 2/14, B60N 2/22, B60N 2/18, B60N 2/30, B60N 2/07

(54) **A ROTATING VEHICLE SEAT AND A METHOD FOR ROTATING A ROTATING VEHICLE SEAT**
DREHENDER FAHRZEUGSITZ UND VERFAHREN ZUM DREHEN EINES DREHENDEN FAHRZEUGSITZES
SIÈGE DE VÉHICULE ROTATIF ET PROCÉDÉ DE ROTATION POUR FAIRE TOURNER UN SIÈGE DE VÉHICULE

(43) Date of publication of application: 30.12.2020
(73) Proprietor: Ningbo Geely Automobile Research & Development Co. Ltd., Hangzhou Bay New District Ningbo Zhejiang 315336 (CN)
(72) Inventor: EWEHAG, Oskar, 412 60 Göteborg (SE); HÖCKS, Johan, 418 77 Göteborg (SE); FORSBERG, Christian, 312 33 Laholm (SE)
(74) Representative: Zacco Sweden AB

(56) References cited:
- GB-A- 468 110
- US-B1- 7 036 883
- US-B1- 7 422 264

## Description

### Field of the invention

The present invention relates to a rotating vehicle seat and a method for rotating a rotating vehicle seat. More specifically, the disclosure relates to a rotating vehicle seat and a method for rotating a rotating vehicle seat as defined in the introductory parts of claim 1 and claim 10.

### Background art

Vehicle seats in most vehicles are fixedly attached facing forward in the driving direction of the vehicle. This comes natural as the driver always needs to be facing forward. However, seats in the vehicle that are not driver seats do not necessarily need to be facing forward. In self-driving vehicles, the seats can also be directed in any direction. As it is still preferred in many situations to have seats directed in the driving direction while driving, while in other situations having seats facing other directions, rotating seats have been used in some vehicles. The patent document GB468110A discloses such a rotating seat where a seat can be reversed by rotating the seat around a vertical axis.

Rotating seats do, however require a lot of space as vehicle seats often are large chairs. Vehicle seats also often have a seat base or backrest that protrudes longer from the base frame of the seat, which further increases the oration diameter that needs to be free if the seat is to be rotated. As vehicles have limited space, fixedly attached seats are often chosen instead of rotating seats, limiting the usability of the vehicle.

There is thus a need in the industry for improved vehicle seats that can be set in different facing angles without requiring a large free rotation volume inside the vehicle cabin space.

### Summary

It is an object to mitigate, alleviate or eliminate one or more of the above-identified deficiencies in the art and disadvantages singly or in any combination and solve at least the above mentioned problem. According to a first aspect there is provided a rotating vehicle seat comprising a backrest attached to a seat base frame and arranged to be rotatably adjustable around a first horizontal axis, a seat base attached to the seat base frame and arranged to be rotatably adjustable around a second horizontal axis parallel to the first horizontal axis, a gear mechanism connected to the seat base frame arranged to rotate the seat base frame from a forward facing position to a backward facing position, wherein the gear mechanism comprises a track, and the seat base frame comprises a guide that is configured to engage the track, such that when the gear mechanism is actuated, the seat base frame is translated in a XY-plane and is rotated around a first vertical axis, and wherein the backrest and the seat base, respectively, are arranged to be folded upwards during at least part of the rotation of the seat base frame around the first vertical axis.

By both translating the seat base frame in the horizontal plane, the XY-plane, while at the same time fold the seat base and the backrest upwards, the space available for rotating the vehicle seat can be used optimally. The translation path of the seat base frame and rotation at each point along the path is chosen in line with available space in the vehicle. The rotational volume required for the rotation of the vehicle seat is minimized and the tailored translation path may further reduce the space needed.

According to some embodiments, the backrest and the seat base are arranged to be folded upwards to a substantially vertical position during at least part of the rotation around the first vertical axis.

In that way the rotational volume and the top view space of the vehicle seat is minimized. If a vertical position of either of the seat base or the backrest is not possible due to bolster design or similar, the seat base and backrest are folded as close to vertical position as possible.

According to some embodiments, the backrest and the seat base are arranged to be folded upwards during at least part of the rotation around the first vertical axis to a position so as to be positioned within a cylindrical rotation volume along the first vertical axis with a circular cross section, the diameter of the circular cross-section being defined by the width of the seat base and/or the width of the backrest. The folding angle of the backrest and seat base is thus adjusted by the available space.

According to some embodiments, the gear mechanism comprises a track and the seat base comprises a guide configured to run in the track such that when the gear mechanism is actuated, the seat base frame translates in a horizontal XY-plane before, after and/or during rotation of the seat base frame around the first vertical axis. The timing of the translation relative the rotation is chosen to make use of the available space and makes it possible to rotate a seat in a space smaller than the minimal rotational volume defined by the width of the seat base and the backrest.

According to some embodiments, the track comprises: a first translation track part extending in a an X-direction in the horizontal plane perpendicular to a forward direction of the vehicle seat, a second translation track part extending in a an X-direction perpendicular to a forward direction of the vehicle seat, and an elliptical track part connecting the first translation track part and the second translation track part. This may be especially advantageous in case of a vehicle seat where the seat base cannot be folded upwards. The backrest is then moved towards the side inner wall of the vehicle during rotation to require less space during rotation.

According to some embodiments, the gear mechanism comprises an cylinder gear mounted on the vehicle floor, a motor driving the cylinder gear and a an elongated toothed engagement part mounted on the seat base frame extending linearly in a side direction of the vehicle seat, the elongated toothed engagement part being in engagement with the cylinder gear. This is a more detailed embodiment translation of the set with its backrest up against the inner side wall of the vehicle cabin during rotation of the vehicles seat with a protruding seat base not possible to fold upwards enough.

According to some embodiments, the gear mechanism comprises an elliptical internal ring gear that is affixed to a vehicle body, and a cylinder gear that is affixed to the seat base frame, wherein the cylinder gear is arranged inside the elliptical internal ring gear such that rotation of the cylinder gear causes it to travel along the circumference of the elliptical internal ring gear, and the seat base frame travels along both X- and Y-directions in the horizontal plane during its rotation from forward facing to backward facing, and ends in the same XY-position after having been rotated. This is a different embodiment of achieving translation during rotation so that the backrest moves towards the inner side wall of the vehicle cabin during rotation to allow more room for the seat base.

According to some embodiments, the gear mechanism comprises an internal semicircle gear that is affixed to a vehicle body, and a cylinder gear that is affixed to the seat base frame, wherein the cylinder gear is arranged inside the internal semicircle gear such that rotation of the cylinder gear causes it to travel along the circumference of the internal semicircle gear, and the seat base frame travels along both X and Y-directions in the horizontal plane during its rotation from forward facing to backward facing, and ends in a different XY-position after having been rotated. This a still further embodiment of achieving translation during rotation so that the backrest moves towards the inner side wall of the vehicle cabin during rotation to allow more room for the seat base.

According to some embodiments, the vehicle seat is translated in the XY-plane so that the center of the cylindrical rotation volume is placed on the first vertical axis, i.e. the first vertical axis is in the center point of the cylindrical rotation volume as seen from a top view, so as to minimize the rotational volume.

According to a second aspect there is provided a method for rotating a rotating vehicle seat according to the first aspect, the method comprising the steps of translating the vehicle seat in the XY-plane, rotating the vehicle seat, folding seat base upwards during the rotation of the seat base frame around the first vertical axis.

According to some embodiments, the method comprises the step of folding the backrest upwards during the rotation of the seat base frame around the first vertical axis.

According to some embodiments, the step of translating the seat bas frame of the vehicle seat in the XY-plane is made concurrent with the step of rotating the seat base frame.

Effects and features of the second aspect are to a large extent analogous to those described above in connection with the first aspect. Embodiments mentioned in relation to the first aspect are largely compatible with the second aspect.

A further scope of applicability of the present invention will become apparent from the detailed description given below. However, it should be understood that the detailed description and specific examples, while indicating preferred embodiments of the invention, are given by way of illustration only. Various changes and modifications within the scope of the invention will become apparent to those skilled in the art from the detailed description.

Hence, it is to be understood that the herein disclosed invention is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present invention, will be more fully appreciated by reference to the following illustrative and non-limiting detailed description of example embodiments of the present invention, when taken in conjunction with the accompanying drawings.
Figure 1a shows a perspective view of a vehicle seat according to an embodiment of the present disclosure where the seat base frame is attached to a cylindrical gear rotating in an elliptical internal ring gear.
Figure 1b is a perspective view of the vehicle seat of Figure 1 after the vehicle seat have been rotated 180 degrees.
Figure 2a is a perspective view of a gear mechanism for a vehicle seat according to one embodiment of the invention.
Figure 2b is a perspective view of the gear mechanism shown in Figure 2a where the seat base frame has been translated and rotated about 50 degrees.

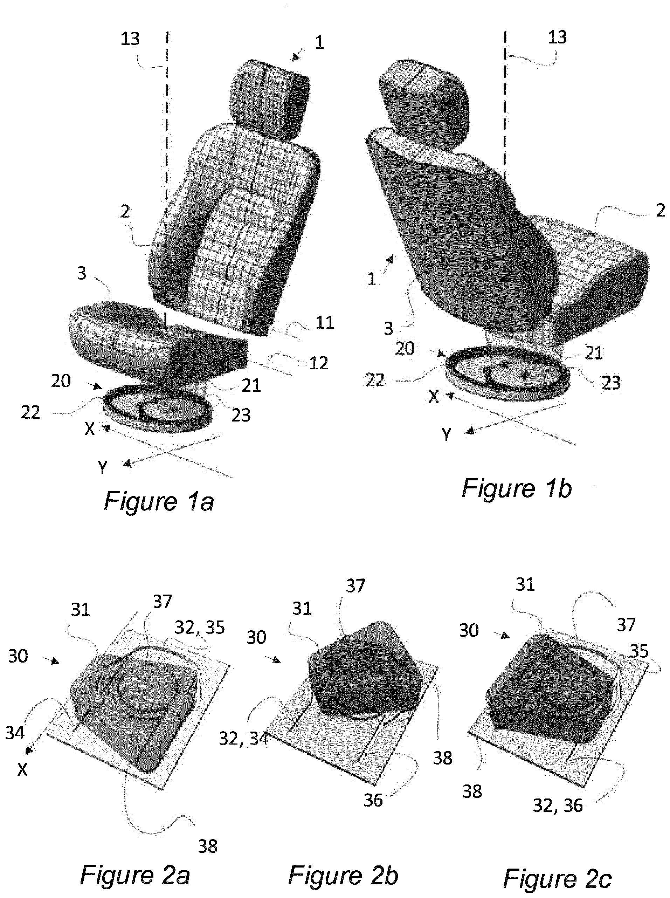

Figure 2b is a perspective view of the gear mechanism shown in Figure 2a where the seat base frame has been rotated 180 degrees.

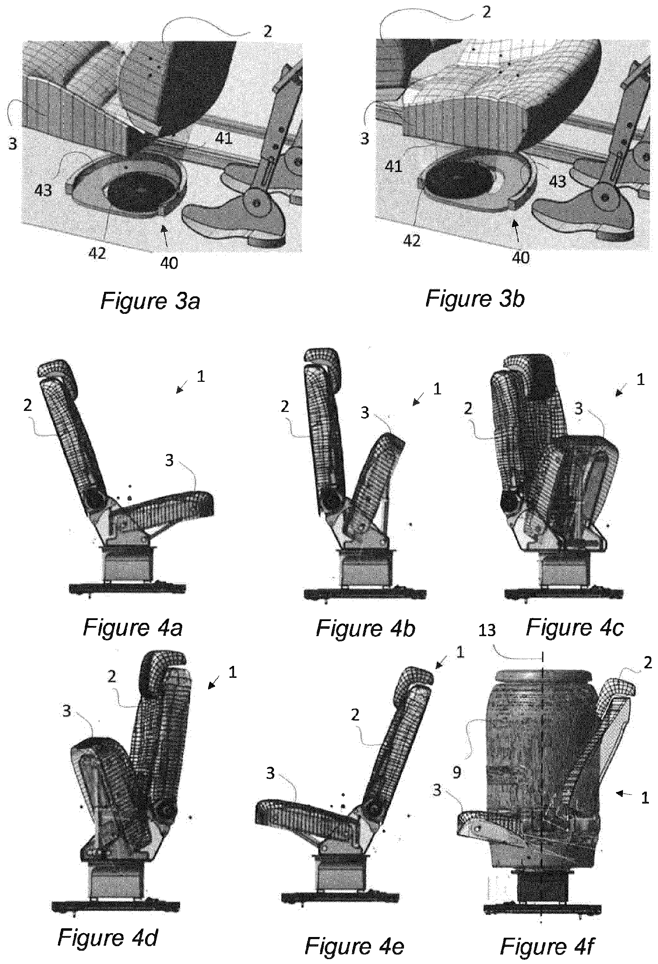

Figure 3a is a perspective view of a vehicle seat according to an embodiment of the present disclosure where the seat base frame is attached to a cylindrical gear rotating in a semi-elliptical internal ring gear
Figure 3b is a perspective view of the vehicle seat in Figure 3a rotated 180 degrees.
Figures 4a is a perspective view of a vehicle seat according to an embodiment of the present disclosure where the seat base and the back rest is in a position ready for use by a user.
Figure 4b is a perspective view of the vehicle seat in Figure 4a where the backrest and seat base have been folded upwards.
Figure 4c is a perspective view of the vehicle seat in Figure 4a where the backrest and seat base have been folded upwards and the seat base frame has been rotated slightly.
Figure 4d is a perspective view of the vehicle seat in Figure 4a where the backrest and seat base have been folded upwards and the seat base frame has been rotated almost 180 degrees.
Figure 4e is a perspective view of the vehicle seat in Figure 4a where the backrest and seat base have been rotated 180 degrees and the seat base and backrest are folded down ready to be used by a user.
Figure 4e is a perspective view of the vehicle seat in Figures 4a-4e showing the rotational volume used when the backrest and seat base are folded up in relation to the volume of the vehicle seat when the backrest and the seat base are folded down.

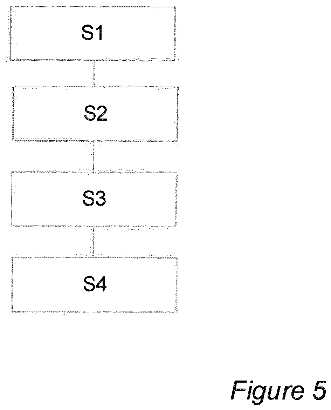

Figure 5 is a block chart of representing the method according to the invention.

### Detailed description

The present invention will now be described with reference to the accompanying drawings, in which currently preferred example embodiments of the invention are shown. This invention may, however, be embodied in many different forms and should not be construed as limited to the herein disclosed embodiments. The disclosed embodiments are provided to fully convey the scope of the invention to the skilled person.

Figures 1 through 4f show the first aspect of this disclosure shows a rotating vehicle seat 1 comprising a backrest 2 attached to a seat base frame 21,31,41 and arranged to be rotatably adjustable around a first horizontal axis 11. The vehicle seat 1 further comprises a seat base 3 attached to the seat base frame 21,31,41 and arranged to be rotatably adjustable around a second horizontal axis 12 parallel to the first horizontal axis 11. A gear mechanism 20,30,40 is connected to the seat base frame 21 and is arranged to rotate the seat base frame 21,31,41 from a forward facing position to a backward facing position. The gear mechanism 20,30,40 comprises a track 22,32,42, and the seat base frame comprises a guide 23,33,43 that is configured to engage the track 22,32,42, such that when the gear mechanism is actuated, the seat base frame 21,31,41 is translated in a XY-plane and is rotated around a first vertical axis 13. The backrest 2 and the seat base 3, respectively, are arranged to be folded upwards during at least part of the rotation of the seat base frame 21,31,41 around the first vertical axis 13.

The gear mechanism 20,30,40 comprises a track 22,32 and the seat base comprises a guide configured to run in the track such that when the gear mechanism 20 is actuated, the seat base frame 21,31 translates in a XY-plane before, after and/or during rotation of the seat base frame 21,31 around the first vertical axis 13.

With reference to Figures 4a - 4f the backrest 2 and the seat base 3 are arranged to be folded upwards to a substantially vertical position during at least part of the rotation around the first vertical axis 13. The backrest 2 and the seat base 3 are arranged to be folded upwards during at least part of the rotation around the first vertical axis 13 to a position so as to be positioned within a cylindrical rotation volume 9 along the first vertical axis 13 with a circular cross section, the diameter of the circular cross-section being defined by the width of the seat base and/or the width of the backrest. Figure 4f shows the gain in reduced space required when folding the seat base and backrest up as much as possible. In folded out seating position the vehicle seat use a lot more space in its facing direction.

With reference to Figures 2a - 2c, the track 32 comprises a first translation track part 34 extending in a an X-direction perpendicular to a forward direction of the vehicle seat 1, a second translation track part 35 extending in a an X-direction perpendicular to a forward direction of the vehicle seat and an elliptical track part 36 connecting the first translation track part and the second translation track part. As shown in Figure 4e the vehicle seat is translated in the XY-plane so that the center of the cylindrical rotation volume 9 is placed on the first vertical axis. This gear mechanism is used to rotate the backrest of the vehicle seat towards the side of the vehicle during rotation so as to move the center of rotation to the optimal position at vertical axis 13, as seen in Figure 4f. The gear mechanism 30 comprises a cylinder gear 37 mounted on the vehicle floor. A motor is driving the cylinder gear and an elongated toothed engagement part 38 mounted on the seat base frame 31 extending linearly in a side direction of the vehicle seat. The elongated toothed engagement part 38 is in engagement with the cylinder gear 37.

With reference to Figures 1a and 1b the gear mechanism 20 comprises an elliptical internal ring gear 23 that is affixed to a vehicle body, and a cylinder gear 23 that is affixed to the seat base frame 21. The cylinder gear 23 is arranged inside the elliptical internal ring gear 22 such that rotation of the cylinder gear 23 causes it to travel along the circumference of the elliptical internal ring gear 22. The seat base frame 21 travels along both X and Y-directions during its rotation from forward facing to backward facing, and ends in the same XY-position after having been rotated. This is a further solution to translate the backrest of the vehicle seat towards the side of the vehicle during rotation so as to move the center of rotation closer to the optimal position at vertical axis 13, as seen in Figure 4f.

With reference to Figures 3a and 3b the gear mechanism comprises an internal semicircle gear 43 that is affixed to a vehicle body, and a cylinder gear 42 that is affixed to the seat base frame 41. The cylinder gear 42 is arranged inside the internal semicircle gear 43 such that rotation of the cylinder gear 42 causes it to travel along the circumference of the internal semicircle gear 43. The seat base frame 41 travels along both X- and Y-directions during its rotation from forward facing to backward facing, and ends in a different XY-position after having been rotated. This is a still further embodiment for translating the backrest of the vehicle seat towards the side of the vehicle during rotation so as to move the center of rotation closer to the optimal position at vertical axis 13, as seen in Figure 4f.

The second aspect of this disclosure is represented by Figure 5 and shows a method for rotating a rotating vehicle seat according to the first aspect, the method comprising the steps of S1 translating the vehicle seat in the XY-plane, S2 rotating the vehicle seat 1, S3 folding seat base 3 upwards during the rotation of the seat base frame 21,31,41 around the first vertical axis 13. As previously described the translation in the horizontal XY-plane to the side of the vehicle will reduce the space required for the rotation as the vehicle seat.

The method further comprises the step of S4 folding the backrest 2 upwards during the rotation of the seat base frame 21,31,41 around the first vertical axis 13. The step of translating the seat bas frame 21,31,41 of the vehicle seat 1 in the XY-plane is made concurrent with the step of rotating the seat base frame 21,31,41.

The person skilled in the art realizes that the present invention is not limited to the preferred embodiments described above. The person skilled in the art further realizes that modifications and variations are possible within the scope of the appended claims. For example, further gear or cam solutions may be contemplated for achieving the translation in the horizontal plane before, after or during rotation of the seat base frame. Additionally, variations to the disclosed embodiments can be understood and effected by the skilled person in practicing the claimed invention, from a study of the drawings, the disclosure, and the appended claims.

## Claims

1. A rotating vehicle seat (1) comprising a backrest (2) attached to a seat base frame (21,31,41) and arranged to be rotatably adjustable around a first horizontal axis (11), a seat base (3) attached to the seat base frame (21,31,41) and arranged to be rotatably adjustable around a second horizontal axis (12) parallel to the first horizontal axis (11),
**characterized in that** the rotating vehicle seat (1) further comprises a gear mechanism (20,30,40) connected to the seat base frame (21) arranged to rotate the seat base frame (21,31,41) from a forward facing position to a backward facing position, wherein the gear mechanism (20,30,40) comprises a track (22,32,42), and the seat base frame comprises a guide (23,33,43) that is configured to engage the track (22,32,42), such that when the gear mechanism is actuated, the seat base frame (21,31,41) is translated in a XY-plane and is rotated around a first vertical axis (13), and wherein the backrest (2) and the seat base (3), respectively, are arranged to be folded upwards during at least part of the rotation of the seat base frame (21,31,41) around the first vertical axis (13).

2. The rotating vehicle seat according to claim 1, wherein the backrest (2) and the seat base (3) are arranged to be folded upwards to a substantially vertical position during at least part of the rotation around the first vertical axis (13).

3. The rotating vehicle seat (1) according to claim 1 or 2, wherein the backrest (2) and the seat base (3) are arranged to be folded upwards during at least part of the rotation around the first vertical axis (13) to a position so as to be positioned within a cylindrical rotation volume (9) along the first vertical axis (13) with a circular cross section, the diameter of the circular cross-section being defined by the width of the seat base and/or the width of the backrest.

4. The rotating vehicle seat (1) according to any one of the preceding claims, wherein the gear mechanism (20,30,40) comprises a track (22,32) and the seat base comprises a guide configured to run in the track such that when the gear mechanism (20) is actuated, the seat base frame (21,31) translates in a XY-plane before, after and/or during rotation of the seat base frame (21,31) around the first vertical axis (13).

5. The rotating vehicle seat (1) according to claim 4, wherein the track (32) comprises: a first translation track part (34) extending in an X-direction perpendicular to a forward direction of the vehicle seat (1), a second translation track part (35) extending in a an X-direction perpendicular to a forward direction of the vehicle seat, and an elliptical track part (36) connecting the first translation track part and the second translation track part.

6. The rotating vehicle seat according to claim 4 or 5, wherein the gear mechanism (30) comprises an cylinder gear (37) mounted on the vehicle floor, a motor driving the cylinder gear and a an elongated toothed engagement part (38) mounted on the seat base frame (31) extending linearly in a side direction of the vehicle seat, the elongated toothed engagement part (38) being in engagement with the cylinder gear (37).

7. The rotating vehicle seat according to any one of the preceding claims, wherein the gear mechanism (20) comprises an elliptical internal ring gear (23) that is affixed to a vehicle body, and a cylinder gear (23) that is affixed to the seat base frame (21), wherein the cylinder gear (23) is arranged inside the elliptical internal ring gear (22) such that rotation of the cylinder gear (23) causes it to travel along the circumference of the elliptical internal ring gear (22), and the seat base frame (21) travels along both X and Y-directions during its rotation from forward facing to backward facing, and ends in the same XY-position after having been rotated.

8. The rotating vehicle seat according to any one of claims 1-6, wherein the gear mechanism comprises an internal semicircle gear (43) that is affixed to a vehicle body, and a cylinder gear (42) that is affixed to the seat base frame (41), wherein the cylinder gear (42) is arranged inside the internal semicircle gear (43) such that rotation of the cylinder gear (42) causes it to travel along the circumference of the internal semicircle gear (43), and the seat base frame (41) travels along both X and Y-directions during its rotation from forward facing to backward facing, and ends in a different XY-position after having been rotated.

9. The rotating vehicle seat according to any one of the preceding claims, wherein the vehicle seat is translated in the XY-plane so that the center of the cylindrical rotation volume (9) is placed on the first vertical axis.

10. A method for rotating a rotating vehicle seat according to any one of claims 1-9, the method comprising the steps of (S1) translating the vehicle seat in the XY-plane, (S2) rotating the vehicle seat (1), (S3) folding seat base (3) upwards during the rotation of the seat base frame (21,31,41) around the first vertical axis (13).

11. The method according to claim 10, further comprising the step of (S4) folding the backrest (2) upwards during the rotation of the seat base frame (21,31,41) around the first vertical axis (13).

12. The method according to claim 10 or 11, wherein the step of translating the seat bas frame (21,31,41) of the vehicle seat (1) in the XY-plane is made concurrent with the step of rotating the seat base frame (21,31,41).

## Patentansprüche

1. Sich drehender Fahrzeugsitz (1), der eine Rückenlehne (2) umfasst und an einem Sitzflächenrahmen (21, 31, 41) angebracht ist und dazu angeordnet ist, drehbar um eine erste horizontale Achse (11) verstellbar zu sein, wobei eine Sitzfläche (3) an dem Sitzflächenrahmen (21, 31, 41) angebracht und dazu angeordnet ist, drehbar um eine zweite horizontale Achse (12) verstellbar zu sein, die parallel zu der ersten horizontalen Achse (11) ist,
**dadurch gekennzeichnet, dass** der sich drehende Fahrzeugsitz (1) ferner einen Zahnradmechanismus (20, 30, 40) umfasst, der mit dem Sitzflächenrahmen (21) verbunden und dazu angeordnet ist, den Sitzflächenrahmen (21, 31, 41) aus einer nach vorne gerichteten Position in eine nach hinten gerichtete Position zu drehen, wobei der Zahnradmechanismus (20, 30, 40) eine Schiene (22, 32, 42) umfasst und der Sitzflächenrahmen eine Führung (23, 33, 43) umfasst, die dazu konfiguriert ist, derart in die Schiene (22, 32, 42) einzugreifen, dass der Sitzflächenrahmen (21, 31, 41) auf einer XY-Ebene verschoben und um eine erste vertikale Achse (13) verschoben wird, wenn der Zahnradmechanismus betätigt wird, und wobei die Rückenlehne (2) und die Sitzfläche (3) jeweils dazu angeordnet sind, während mindestens eines Teils der Drehung des Sitzflächenrahmens (21, 31, 41) um die erste vertikale Achse (13) nach oben gefaltet zu werden.

2. Sich drehender Fahrzeugsitz nach Anspruch 1, wobei die Rückenlehne (2) und die Sitzfläche (3) dazu angeordnet sind, während mindestens eines Teils der Drehung um die erste vertikale Achse (13) im Wesentlichen nach oben gefaltet zu werden.

3. Sich drehender Fahrzeugsitz (1) nach Anspruch 1 oder 2, wobei die Rückenlehne (2) und die Sitzfläche (3) dazu angeordnet sind, während mindestens eines Teils der Drehung um die erste vertikale Achse (13) nach oben in eine Position gefaltet zu werden, um innerhalb eines zylindrischen Drehvolumens (9) entlang der ersten vertikalen Achse (13) mit einem kreisförmigen Querschnitt positioniert zu sein, wobei der Durchmesser des kreisförmigen Querschnitts durch die Breite der Sitzfläche und/oder die Breite der Rückenlehne definiert ist.

4. Sich drehender Fahrzeugsitz (1) nach einem der vorangehenden Ansprüche, wobei der Zahnradmechanismus (20, 30, 40) eine Schiene (22, 32) umfasst und die Sitzfläche eine Führung umfasst, die dazu konfiguriert ist, sich auf der Schiene zu bewegen, sodass der Sitzflächenrahmen (21, 31) vor, nach und/oder während der Drehung des Sitzflächenrahmens (21, 31) um die erste vertikale Achse (13) auf einer XY-Ebene verschoben wird, wenn der Zahnradmechanismus (20) betätigt wird.

5. Sich drehender Fahrzeugsitz (1) nach Anspruch 4, wobei die Schiene (32) Folgendes umfasst: einen ersten Verschiebungsschienenteil (34), der sich in einer X-Richtung senkrecht zu einer Vorwärtsrichtung des Fahrzeugsitzes (1) erstreckt, einen zweiten Verschiebungsschienenteil (35), der sich in einer X-Richtung senkrecht zu einer Vorwärtsrichtung des Fahrzeugsitzes erstreckt, und einen elliptischen Schienenteil (36), der den ersten Verschiebungsschienenteil und den zweiten Verschiebungsschienenteil verbindet.

6. Sich drehender Fahrzeugsitz nach Anspruch 4 oder 5, wobei der Zahnradmechanismus (30) ein Zylinderrad (37) umfasst, das an dem Fahrzeugboden montiert ist, wobei ein Motor das Zylinderzahnrad antreibt und sich ein langgestrecktes verzahntes Eingriffsteil (38), das an dem Sitzflächenrahmen (31) montiert ist, linear in einer Seitenrichtung des Fahrzeugsitzes erstreckt, wobei sich das langgestreckte verzahnte Eingriffsteil (38) in Eingriff mit dem Zylinderrad (37) befindet.

7. Sich drehender Fahrzeugsitz nach einem der vorangehenden Ansprüche, wobei der Zahnradmechanismus (20) ein elliptisches inneres Hohlrad (23), das an einer Fahrzeugkarosserie befestigt ist, und ein Zylinderrad (23) umfasst, das an dem Sitzflächenrahmen (21) befestigt ist, wobei das Zylinderrad (23) derart innerhalb des elliptischen inneren Hohlrads (22) angeordnet ist, dass die Drehung des Zylinderrads (23) es dazu veranlasst, sich entlang des Umfangs des elliptischen inneren Hohlrads (22) zu bewegen, und sich der Sitzflächenrahmen (21) während seiner Drehung aus nach vorne gerichtet in nach hinten gerichtet sowohl entlang der X- als auch der Y-Richtung bewegt und in derselben XY-Position endet, nachdem er gedreht wurde.

8. Sich drehender Fahrzeugsitz nach einem der Ansprüche 1-6, wobei der Zahnradmechanismus eine inneres Halbkreisrad (43), das an einer Fahrzeugkarosserie befestigt ist, und ein Zylinderrad (42) umfasst, das an dem Sitzflächenrahmen (41) befestigt ist, wobei das Zylinderrad (42) derart innerhalb des inneren Halbkreisrads (43) angeordnet ist, dass die Drehung des Zylinderrads (42) es dazu veranlasst, sich entlang des Umfangs des inneren Halbkreisrads (43) zu bewegen, und sich der Sitzflächenrahmen (41) während seiner Drehung aus nach vorne gerichtet in nach hinten gerichtet sowohl entlang der X- als auch der Y-Richtung bewegt und in einer anderen XY-Position endet, nachdem er gedreht wurde.

9. Sich drehender Fahrzeugsitz nach einem der vorangehenden Ansprüche, wobei der Fahrzeugsitz derart auf einer XY-Ebene verschoben wird, dass der Mittelpunkt des zylindrischen Drehvolumens (9) auf der ersten vertikalen Achse platziert ist.

10. Verfahren zum Drehen eines sich drehenden Fahrzeugsitzes nach einem der Ansprüche 1-9, wobei das Verfahren die Schritte des (S1) Verschiebens des Fahrzeugsitzes auf der XY-Ebene, (S2) Drehens des Fahrzeugsitzes (1), (S3) Faltens der Sitzfläche (3) nach oben während der Drehung des Sitzflächenrahmens (21, 31, 41) um die erste vertikale Achse (13) umfasst.

11. Verfahren nach Anspruch 10, ferner umfassend den Schritt des (S4) Faltens der Rückenlehne (2) nach oben während der Drehung des Sitzflächenrahmens (21, 31, 41) um die erste vertikale Achse (13).

12. Verfahren nach Anspruch 10 oder 11, wobei der Schritt des Verschiebens des Sitzflächenrahmens (21, 31, 41) des Fahrzeugsitzes (1) auf der XY-Ebene gleichzeitig mit dem Schritt des Drehens des Sitzflächenrahmens (21, 31, 41) durchgeführt wird.

## Revendications

1. Siège de véhicule rotatif (1) comprenant un dossier (2) fixé à un châssis de base de siège (21, 31, 41) et agencé pour être réglable en rotation autour d'un premier axe horizontal (11), une base de siège (3) fixée au châssis de base de siège (21, 31, 41) et agencée pour être réglable en rotation autour d'un second axe horizontal (12) parallèle au premier axe horizontal (11),
**caractérisé en ce que** le siège de véhicule rotatif (1) comprend en outre un mécanisme d'engrenage (20, 30, 40) relié au châssis de base de siège (21) agencé pour faire tourner le châssis de base de siège (21, 31, 41) à partir d'une position tournée vers l'avant vers une position tournée vers l'arrière, dans lequel le mécanisme d'engrenage (20, 30, 40) comprend une piste (22, 32, 42), et le châssis de base de siège comprend un guide (23, 33, 43) qui est configuré pour venir en prise avec la piste (22, 32, 42), de sorte que lorsque le mécanisme d'engrenage est actionné, le châssis de base de siège (21, 31, 41) est translaté dans un plan XY et est tourné autour d'un premier axe vertical (13), et dans lequel le dossier (2) et la base de siège (3), respectivement, sont agencés pour être repliés vers le haut pendant au moins une partie de la rotation du châssis de base de siège (21, 31, 41) autour du premier axe vertical (13).

2. Siège de véhicule rotatif selon la revendication 1, dans lequel le dossier (2) et la base de siège (3) sont agencés pour être repliés vers le haut dans une position sensiblement verticale pendant au moins une partie de la rotation autour du premier axe vertical (13).

3. Siège de véhicule rotatif (1) selon la revendication 1 ou 2, dans lequel le dossier (2) et la base de siège (3) sont agencés pour être repliés vers le haut pendant au moins une partie de la rotation autour du premier axe vertical (13) jusqu'à une position de manière à se positionner à l'intérieur d'un volume de rotation cylindrique (9) selon le premier axe vertical (13) à section circulaire, le diamètre de la section circulaire étant défini par la largeur de la base de siège et/ou la largeur du dossier.

4. Siège de véhicule rotatif (1) selon l'une quelconque des revendications précédentes, dans lequel le mécanisme d'engrenage (20, 30, 40) comprend une piste (22, 32) et la base de siège comprend un guide configuré pour se déplacer dans la piste de sorte que lorsque le mécanisme d'engrenage (20) est actionné, le châssis de base de siège (21, 31) se déplace dans un plan XY avant, après et/ou pendant la rotation du châssis de base de siège (21, 31) autour du premier axe vertical (13).

5. Siège de véhicule rotatif (1) selon la revendication 4, dans lequel la piste (32) comprend : une première partie de piste de translation (34) s'étendant dans une direction X perpendiculaire à une direction vers l'avant du siège de véhicule (1), une seconde partie de piste de translation (35) s'étendant dans une direction X perpendiculaire à une direction vers l'avant du siège de véhicule, et une partie de piste elliptique (36) reliant la première partie de piste de translation et la seconde partie de piste de translation.

6. Siège de véhicule rotatif selon la revendication 4 ou 5, dans lequel le mécanisme d'engrenage (30) comprend un engrenage cylindrique (37) monté sur le plancher du véhicule, un moteur entraînant l'engrenage cylindrique et une pièce de mise en prise dentée allongée (38) montée sur le châssis de base de siège (31) s'étendant linéairement dans une direction latérale du siège de véhicule, la partie de mise en prise dentée allongée (38) étant en prise avec l'engrenage cylindrique (37).

7. Siège de véhicule rotatif selon l'une quelconque des revendications précédentes, dans lequel le mécanisme d'engrenage (20) comprend une couronne dentée interne elliptique (23) qui est fixée à une carrosserie de véhicule, et un engrenage cylindrique (23) qui est fixé au châssis de base de siège (21), dans lequel l'engrenage cylindrique (23) est agencé à l'intérieur de la couronne dentée interne elliptique (22) de sorte que la rotation de l'engrenage cylindrique (23) l'amène à se déplacer le long de la circonférence de la couronne dentée interne elliptique (22) et le châssis de base de siège (21) se déplace le long des deux directions X et Y pendant sa rotation de face vers l'avant vers face vers l'arrière, et se termine dans la même position XY après avoir été tourné.

8. Siège de véhicule rotatif selon l'une quelconque des revendications 1 à 6, dans lequel le mécanisme d'engrenage comprend un engrenage en demi-cercle interne (43) qui est fixé à une carrosserie de véhicule, et un engrenage cylindrique (42) qui est fixé au châssis de base du siège (41), dans lequel l'engrenage cylindrique (42) est agencé à l'intérieur de l'engrenage semi-circulaire interne (43) de sorte que la rotation de l'engrenage cylindrique (42) l'amène à se déplacer le long de la circonférence de l'engrenage semi-circulaire interne (43), et le châssis de base de siège (41) se déplace le long des deux directions X et Y pendant sa rotation de face vers l'avant vers face vers l'arrière, et se termine dans une position XY différente après avoir été tourné.

9. Siège de véhicule rotatif selon l'une quelconque des revendications précédentes, dans lequel le siège de véhicule est translaté dans le plan XY, de sorte que le centre du volume de rotation cylindrique (9) est placé sur le premier axe vertical.

10. Procédé de rotation d'un siège de véhicule rotatif selon l'une quelconque des revendications 1 à 9, le procédé comprenant les étapes de (S1) translation du siège de véhicule dans le plan XY, (S2) rotation du siège de véhicule (1), (S3) pliage de la base de siège (3) vers le haut lors de la rotation du châssis de base de siège (21, 31, 41) autour du premier axe vertical (13).

11. Procédé selon la revendication 10, comprenant en outre l'étape de (S4) pliage du dossier (2) vers le haut pendant la rotation du châssis de base de siège (21, 31, 41) autour du premier axe vertical (13).

12. Procédé selon la revendication 10 ou 11, dans lequel l'étape de translation du châssis de base de siège (21, 31, 41) du siège de véhicule (1) dans le plan XY est effectuée simultanément avec l'étape de rotation du châssis de base de siège (21, 31, 41).
